# EUROPEAN PATENT APPLICATION

(11) **EP 3 672 131 A1**
(43) Date of publication of application: **24.06.2020**
(21) Application number: 18863420.8
(22) Date of filing: 13.04.2018
(51) Int. Cl.: H04L 1/18

(54) **METHOD AND APPARATUS FOR TRANSMITTING ON-BOARD DEVICE DATA**

(30) Priority: 29.09.2017 CN 201710910454
(71) Applicant: Xi'an Zhongxing New Software Co., Ltd., Xi'an, Shaanxi 710114 (CN)
(72) Inventor: WEI, Xingyuan, Xi'an Shaanxi 710114 (CN)
(74) Representative: Angerhausen, Christoph
(86) International application number: PCT/CN2018/082942
(87) International publication number: WO 2019/062074

(57) **Abstract**

Provided is a method for transferring data of on-board device. The method includes: parsing a service type and a message identifier (ID) of a target message for re-transmission; sending the target message for re-transmission to a corresponding re-transmission interface according to the service type and the message ID of the target message for re-transmission; and sending the target message for re-transmission to a vehicle management platform when a re-transmission time interval is reached.

## Description

### TECHNICAL FIELD

The disclosure relates to but not limited to, the field of data transmission technology, in particular to a method and an apparatus for transferring data of on-board device.

### BACKGROUND

Internet of Vehicles(IOV) device uploads vehicle data to a vehicle management platform through wireless network, and the vehicle management platform sends control instructions to the vehicle through the network, thereby completing the remote control. Application communication protocols such as MQTT (Message Queuing Telemetry Transport), HTTP(Hyper Text Transfer Protocol), COAP(Constrained Application Protocol) etc., are used for communication between the IOV device and the vehicle management platform. These communication protocols are used to carry and transfer upper layer service instructions.

### SUMMARY

The following is an overview of the subject detailed herein. The overview is not intended to limit the scope of the claims.

None of the above application communication protocols has defined the corresponding process to ensure the reliability of the data transmission of the upper service instructions. When the network communication environment is poor and the data communication cannot be carried out normally, the IOV device cannot receive and send the upper level service instructions normally, and the upper level service instructions cannot be executed normally, resulting in the users unable to query the vehicle status and control the vehicle normally. The commonly used methods to improve the reliability of upper layer service data packet and their defects are as follows:

One method is to use a same re-transmission interface for all unsuccessful sent message data packets to be re-transmitted. As long as the response packets from the vehicle management platform are received, the uplink data is considered to be successfully transmitted, then message data packets to be re-transmitted are cleared. Otherwise, after the interval time is reached, the message data packets to be re-transmitted in the re-transmission interface will be sent again. In the case of unstable network communication, new message data packets to be re-transmitted will cover the original message data packets to be re-transmitted, which will cause the original message data packets to be re-transmitted to be unable to be re-transmitted, and a large number of uplink and downlink instructions responses will be discarded, resulting in the failure implementation of vehicle status reporting and control instructions between the IOV device and the vehicle management platform.

Another method is to use their respective re-transmission interfaces for each unsuccessful sent message data packet to be re-transmitted. After the message data packets are successfully sent, the re-transmission interfaces corresponding to the message data packets are cleared. That is to say, in the case of unstable network communication, the message data packets fail to be sent all the time, which will accumulate a large number of message data packets to be re-transmitted, resulting in a waste of internal resources of the IOV device and possibly depleted resources. In addition, there may be multiple re-transmission message data packets for the same service type. For example, the vehicle status reporting service needs to be triggered regularly every 10 minutes. If the network communication is unstable for 1 hour, it needs to report 6 times of vehicle status service. At this time, it needs to use 6 re-transmission interfaces, while the vehicle management platform only needs the IOV device to provide the latest vehicle status, multiple re-transmission data packets with the same service type are uploaded repeatedly, which is redundant for the vehicle management platform.

The present disclosure provides a method and an apparatus for transferring data of on-board device, which can improve the reliability of transferring data of on-board device.

An embodiment of the present disclosure provides a method for transferring data of on-board device, including:
parsing a service type and a message identifier (ID) of a target message for re-transmission;
sending the target message for re-transmission to a corresponding re-transmission interface according to the service type and the message ID of the target message for re-transmission; and
sending the target message for re-transmission to a vehicle management platform when a re-transmission time interval is reached.

In an exemplary embodiment, before sending the target message for re-transmission to the vehicle management platform, the method further includes:
merging the target message for re-transmission with a data message temporarily stored in the re-transmission interface, and using a merged data message as a target message for re-transmission.

In an exemplary embodiment, before parsing the service type and the message identifier (ID) of the target message for re-transmission, the method further includes: determining the target message for re-transmission.

In an exemplary embodiment, determining the target message for re-transmission includes:
using a data message sent to the vehicle management platform as the target message for re-transmission; or
using a data message which is sent to the vehicle management platform and for which a feedback confirmation from the vehicle management platform is not received as the target message for re-transmission.

In an exemplary embodiment, after sending the target message for re-transmission to the vehicle management platform, the method further includes:
clearing the target message for re-transmission.

In an exemplary embodiment, before sending the target message for re-transmission to the vehicle management platform, the method further includes:
detecting whether a number of current re-transmission of the target message for re-transmission exceeds a maximum number of re-transmission or a time of current re-transmission of the target message for re-transmission exceeds a maximum time of re-transmission; executing the step of sending the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clearing the target message for re-transmission when the number of current re-transmission of the target message for re-transmission exceeds the maximum number of re-transmission or the time of current re-transmission of the target message for re-transmission exceeds the maximum time of re-transmission.

In an exemplary embodiment, before sending the target message for re-transmission to the vehicle management platform, the method further includes:
detecting whether a feedback confirmation from the vehicle management platform is received; executing the step of sending the target message for re-transmission to the vehicle management platform when the feedback confirmation from the vehicle management platform is not received; and clearing the target message for re-transmission when the feedback confirmation from the vehicle management is received.

In an exemplary embodiment, detecting whether the feedback confirmation from the vehicle management platform is received includes:
parsing a service type and a message identifier (ID) of a confirmation data packet sent by the vehicle management platform;
matching the service type and the message ID of the confirmation data packet acquired by parsing with the service type and the message ID of the target message for re-transmission;
determining the feedback confirmation from the vehicle management platform has been received when the matching is successful;
determining the feedback confirmation from the vehicle management platform has not been received when the matching fails.

An embodiment of the present disclosure further provides an apparatus for transferring data of on-board device, including:
a parsing module, configured to parse a service type and a message identifier (ID) of a target message for re-transmission;
an interface module, configured to send the target message for re-transmission to a corresponding re-transmission interface according to the service type and the message ID of the target message for re-transmission;
a sending module, configured to send the target message for re-transmission to a vehicle management platform when a re-transmission time interval is reached.

In an exemplary embodiment, the apparatus further includes:
a merging module, configured to merge the target message for re-transmission with a data message temporarily stored in the re-transmission interface, and use a merged data message as a target message for re-transmission.

In an exemplary embodiment, the apparatus further includes:
a determination module, configured to determine the target message for re-transmission.

In an exemplary embodiment, the determination module is configured to:
use a data message sent to the vehicle management platform as the target message for re-transmission: or
use a data message which is sent to the vehicle management platform and for which a feedback confirmation from the vehicle management platform is not received as the target message for re-transmission.

In an exemplary embodiment, the apparatus further includes:
a clear module, configured to clear the target message for re-transmission.

In an exemplary embodiment, the apparatus further includes:
a detection module, configured to detect whether a number of current re-transmission of the target message for re-transmission exceeds a maximum number of re-transmission or a time of current re-transmission of the target message for re-transmission exceeds a maximum time of re-transmission before the sending module sends the target message for re-transmission to the vehicle management platform; trigger the sending module to send the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clear the target message for re-transmission when the number of current re-transmission of the target message for re-transmission exceeds the maximum number of re-transmission or the time of current re-transmission of the target message for re-transmission exceeds the maximum time of re-transmission.

In an exemplary embodiment, the detection module is further configured to:
detect whether a feedback confirmation from the vehicle management platform is received before the sending module sends the target message for re-transmission to the vehicle management platform; trigger the sending module to send the target message for re-transmission to the vehicle management platform when the feedback confirmation from the vehicle management platform is not received; and clear the target message for re-transmission when the feedback confirmation from the vehicle management is received.

In an exemplary embodiment, the detection module is configured to:
parse a service type and a message identifier (ID) of a confirmation data packet sent by the vehicle management platform;
match the service type and the message ID of the confirmation data packet acquired by parsing with the service type and the message ID of the target message for re-transmission;
determine the feedback confirmation from the vehicle management platform has been received when the matching is successful;
determine the feedback confirmation from the vehicle management platform has not been received when the matching fails.

An embodiment of the disclosure also provides a computer-readable storage medium, which stores computer executable instructions that when executed, implement the above method for transferring data of on-board device.

The embodiments of the disclosure have the following beneficial effects:
in the embodiments of the disclosure, the message ID is used as the confirmation basis and re-transmission is made according to the service type, avoiding the situation where a large number of uplink and downlink instructions responses are discarded and repeatedly sent, reducing the use of internal resources, and reducing the data flow of network communication.

Other aspects will become apparent upon reading and understanding the accompanying drawings and detailed description.

### BRIEF DESCRIPTION OF THE DRAWINGS

FIG. 1 is a flow chart of a method for transferring data of on-board device according to an embodiment of the present disclosure;
FIG. 2 is a structural diagram of an apparatus for transferring data of on-board device according to an embodiment of the present disclosure;
FIG. 3 is a flow chart of re-transmission of data to be re-transmitted of example 1;
FIG. 4 is a flow chart of re-transmission of current single data of example 2;
FIG. 5 is a flow chart of re-transmission of current single data of example 4;
FIG. 6 is the implementation diagram of re-transmission between the IOV device and the vehicle management platform of example 5;
FIG. 7 is a schematic diagram of multiple data acquisition for the parameter type of example 5.

### DETAILED DESCRIPTION

The embodiments of the present disclosure will be described in combination with the accompanying drawings.

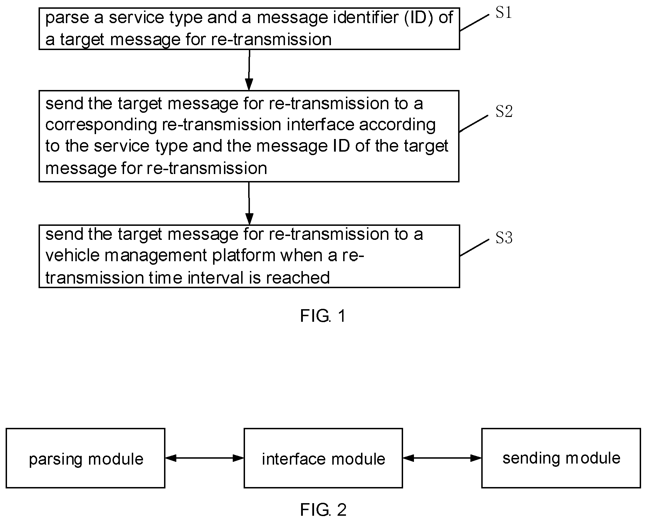

As shown in Fig. 1, an embodiment of the disclosure provides a method for transferring data of on-board device, which can be applied to the IOV device, including:
S1: parsing a service type and a message identifier (ID) of a target message for re-transmission;
S2: sending the target message for re-transmission to a corresponding re-transmission interface according to the service type and the message ID of the target message for re-transmission; and
S3: sending the target message for re-transmission to a vehicle management platform when a re-transmission time interval is reached.

In the embodiments of the present disclosure, the message ID is used as the confirmation basis and re-transmission is made according to the service type to improve the reliability of data transmission. When data is transferred between the IOV device and the vehicle management platform, the IOV device records the message ID of each message data packet. After receiving each message data packet, the vehicle management platform extracts the message ID, and returns a confirmation data packet carrying the corresponding message ID. After sending a message data packet, the IOV device will regularly check whether the confirmation data packet that matches the service type and consistent with the message ID has been received according to the service type. The service type may be a vehicle status reporting service, a remote control service, etc. If it has been received, it can be considered that the sending is successful; if it has not been received, the message data packet is resent based on the service type when an interval time is reached.

Before sending the target message for re-transmission to the vehicle management platform, the method further includes:

merging the target message for re-transmission with a data message temporarily stored in the re-transmission interface, and using a merged data message as a target message for re-transmission.

One of two modes can be adopted in the embodiments of the present disclosure when the target message for re-transmission is sent.
Mode 1: when the same type of service is triggered, the new service intercepts the original service and the new service instructions are directly executed, that is, the new target message for re-transmission covers the old target message for re-transmission.
Mode 2: when the same type of service is triggered, the new service is merged with the original service, and the merged service instructions are executed, that is, the new target message for re-transmission is merged with the old target message for re-transmission.

The service type is used as the basis of re-transmission and interception in the embodiment of the disclosure. Re-transmission message data packets of the same service type will not be repeatedly sent in mode 1, and data packet of each service type will not be missed in mode 2, which will not lead to waste or depletion of internal resources of the IOV device and a large number of data blocking. While the reliability of data transmission is improved, it avoids resource depletion and data blocking, optimizes the data communication ability between the IOV device and the vehicle management platform, and improves the user experience.

Before parsing the service type and the message identifier (ID) of the target message for re-transmission, the method further includes:
determining the target message for re-transmission.

Optionally, determining the target message for re-transmission includes:
using a data message sent to the vehicle management platform as the target message for re-transmission: or
using a data message which is sent to the vehicle management platform and for which a feedback confirmation from the vehicle management platform is not received as the target message for re-transmission.

According to the embodiments of the present disclosure, each message to be sent can be taken as a target message for re-transmission, and when a feedback confirmation from the vehicle management platform is received, the corresponding target message for re-transmission can be cleared.

According to the embodiments of the present disclosure, an unsuccessful sent message can also be taken as a target message for re-transmission.

After sending the target message for re-transmission to the vehicle management platform, the method further includes:
clearing the target message for re-transmission.

Before sending the target message for re-transmission to the vehicle management platform in step S3, the method further includes:
detecting whether a number of current re-transmission of the target message for re-transmission exceeds a maximum number of re-transmission or the current re-transmission time of the target message for re-transmission exceeds a time of current re-transmission; executing the step of sending the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clearing the target message for re-transmission when the number of current re-transmission of the target message for re-transmission exceeds the maximum number of re-transmission or the time of current re-transmission of the target message for re-transmission exceeds the maximum time of re-transmission.

For message of each service type in the embodiments of the present disclosure, the maximum number of re-transmission or the maximum time of re-transmission can be defined. Once one of them is exceeded, the message will not be re-transmitted.

Before sending the target message for re-transmission to the vehicle management platform, the method further includes:
detecting whether a feedback confirmation from the vehicle management platform is received; executing the step of sending the target message for re-transmission to the vehicle management platform when the feedback confirmation from the vehicle management platform is not received; and clearing the target message for re-transmission when the feedback confirmation from the vehicle management is received.

Detecting whether the feedback confirmation from the vehicle management platform is received includes:
parsing a service type and a message identifier (ID) of a confirmation data packet sent by the vehicle management platform;
matching the service type and the message ID of the confirmation data packet acquired by parsing with the service type and the message ID of the target message for re-transmission;
determining the feedback confirmation from the vehicle management platform has been received when the matching is successful;
determining the feedback confirmation from the vehicle management platform has not been received when the matching fails.

As shown in Fig. 2, an embodiment of the present disclosure further provides an apparatus for transferring data of on-board device, including:
a parsing module, configured to parse a service type and a message identifier (ID) of a target message for re-transmission;
an interface module, configured to send the target message for re-transmission to a corresponding re-transmission interface according to the service type and the message ID of the target message for re-transmission;
a sending module, configured to send the target message for re-transmission to a vehicle management platform when a re-transmission time interval is reached.

Optionally, the apparatus further includes:
a merging module, configured to merge the target message for re-transmission with a data message temporarily stored in the re-transmission interface, and use a merged data message as a target message for re-transmission.

Optionally, the apparatus further includes:
a determination module, configured to determine the target message for re-transmission.

Optionally, the determination module is configured to:
use a data message sent to the vehicle management platform as the target message for re-transmission: or
use a data message which is sent to the vehicle management platform and for which a feedback confirmation from the vehicle management platform is not received as the target message for re-transmission.

Optionally, the apparatus further includes:
a clear module, configured to clear the target message for re-transmission.

Optionally, the apparatus further includes:
a detection module, configured to detect whether a number of current re-transmission of the target message for re-transmission exceeds a maximum number of re-transmission or a time of current re-transmission of the target message for re-transmission exceeds a maximum time of re-transmission before the sending module sends the target message for re-transmission to the vehicle management platform; trigger the sending module to send the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clear the target message for re-transmission when the number of current re-transmission of the target message for re-transmission exceeds the maximum number of re-transmission or the time of current re-transmission of the target message for re-transmission exceeds the maximum time of re-transmission.

Optionally, the detection module is further configured to:
detect whether the feedback confirmation from the vehicle management platform is received before the sending module sends the target message for re-transmission to a vehicle management platform; trigger the sending module to send the target message for re-transmission to the vehicle management platform when the feedback confirmation from the vehicle management platform is not received; and clear the target message for re-transmission when the feedback confirmation from the vehicle management is received.

Optionally, the detection module is configured to:
parse a service type and a message identifier (ID) of a confirmation data packet sent by the vehicle management platform;
match the service type and the message ID of the confirmation data packet acquired by parsing with the service type and the message ID of the target message for re-transmission;
determine the feedback confirmation from the vehicle management platform has been received when the matching is successful;
determine the feedback confirmation from the vehicle management platform has not been received when the matching fails.

### Example 1

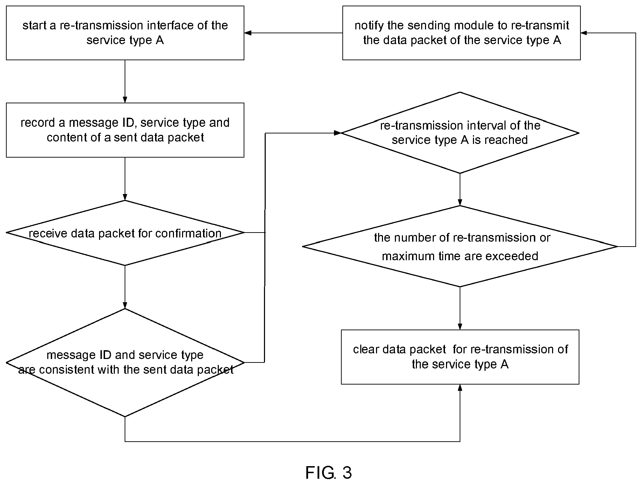

As shown in Fig. 3, the working process of this example can be as follows:
when service type A is triggered, start a re-transmission interface of the service type A; record a message ID, service type and content of a sent data packet; before a re-transmission time interval is reached, clear the data packet for re-transmission in the service type A if a feedback confirmation returned by a vehicle management platform is received, and the message ID and service type in the feedback confirmation are consistent with the sent data packet; otherwise, re-transmit the data packet of the service type A; during the re-transmission, it is checked whether the maximum number of re-transmission or the maximum time of re-transmission has been exceeded; if it has been exceeded, clear the re-transmission data packet of the service type A.

### Example 2

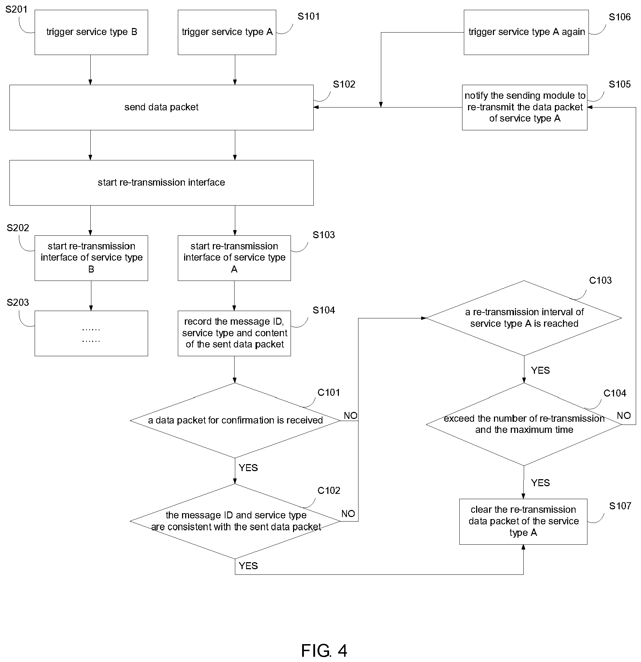

This example provides a mechanism between an IOV device and a vehicle management platform, where a message ID is used as a basis for confirmation and re-transmission is made according to different service types. This example describes a method of re-transmission for a current single data service type. As shown in Fig. 4, the optional process is as follows:
Step S101: the IOV device triggers a service type A;
Step S102: the IOV device sends a message data packet;
Step S103: the IOV device starts a re-transmission interface of the service type A;
Step S104: it is recorded in the re-transmission interface the message ID, service type and data packet content of the packet sent with the service type A ;
Judgment C101: it is judged whether a confirmation data packet returned by the vehicle management platform is received before a re-transmission time interval of the service type A is reached;
Judgment C102: it is judged whether the message ID and the service type in the received confirmation data packet are consistent with that of the sent packet;
Judgment C103: it is judged whether the re-transmission time interval of the service type A is reached;
Judgment C104: it is judged whether the maximum number of re-transmission and the maximum time of re-transmission of the service type A are exceeded;
Step S105: the sending module are notified to re-transmit the data packet of the service type A;
Step S106: the event of the service type A is triggered again;
Step S107: the re-transmission data packet of the service type A is cleared ;
Step S201: the IOV device triggers service type B;
Step S202: the IOV device starts the re-transmission interface of the service type B;
Step S203: the re-transmission logic of the service type B is implemented.

### Example 3

In this example, the optional implementation of re-transmission scheme for IOV device and vehicle management platform is described in detail:
Step S301: the IOV device receives an event triggering notification of service type A, collects a parameter data corresponding to the service type A, and fills the parameter data into a message data packet to be sent, which may also carry the message ID and the service type assigned by the IOV device. The process proceeds to step S302;
Step S302: the IOV device calls the uplink interface to start sending the message data packet of service type A / service type B / other service types to the vehicle management platform, and the process proceeds to step S303 or step S403 according to the service type;
Step S303: the corresponding re-transmission interface are started according to the service type, here the interface of the service type A are started. the interval time in the interface is read, and a re-transmission timer of the service type A is enabled. The processing interface of the service type A re-transmission is registered. The process proceeds to step S103;
Step S304: it is recorded the message ID, service type and data content of the packet to be re-transmitted in the re-transmission interface, and the process proceeds to step C301;
Judgment C301: it is blocked in the downlink instruction receiving module, the confirmation message data packet returned by the vehicle management platform; if the confirmation message packet is received within the regular interval time, the process proceeds to judgment C302; if no confirmation message is received beyond the regular interval time, the process proceeds to step C303;
Judgment C302: it is judged whether the message ID and the service type in the received confirmation message are consistent with those carried in the sending data packet of the service type A; if they are consistent, it means that the sending data packet has been successfully received by the vehicle management platform, the process proceeds to step S307; if not, the process proceeds to step C303;
Judgment C303: it is judged whether the re-transmission interval time is reached; if it has already been reached, it means that no confirmation data packet of service type A has been received within the time interval, the process proceeds to step C304;
Judgment C304: if the maximum number of re-transmissions or the maximum time of re-transmissions has been exceeded, it can be indicated that re-transmission is no longer needed, and the process may proceed to step S307; otherwise, the process can proceed to step S305.
Step S305: if the current situation meets the re-transmission conditions, the data packet for re-transmission with the service type A is extracted, including message ID, service type, data content, and the sending module are notified to resend data packet of the service type A;
Step S306: in the process of waiting for re-transmission of the service type A, if the IOV device triggers service type A event again, the IOV device recollects the parameter data corresponding to service type A and fills the parameter data into the message data packet to be sent, which can also carry the message ID and the service type assigned by the IOV device, and the process proceeds to step S302. That is, the new data content of the service type A cover the original data content to be re-transmitted to ensure that the latest data content is sent to the vehicle management platform;
Step S307: if the data collected for the service type A is sent successfully or no longer meets the re-transmission conditions, the re-transmission data content and the re-transmission timer are cleared.
Step S401: the IOV device receives an event triggering notification of service type B, collects a parameter data corresponding to the service type B, and fills the parameter data into a message packet to be sent which may also carry the message ID and the service type assigned by the IOV device. The process proceeds to step S402;
Step S402: the corresponding re-transmission interface are started according to the service type, here the interface of the service type B are started. The interval time are read in the interface, and the re-transmission timer of the service type B are enabled. The processing interface of the service type B for re-transmission is registered, and the process proceeds to step S403;
Step S403: the re-transmission logic of the service type B is implemented.

### Example 4

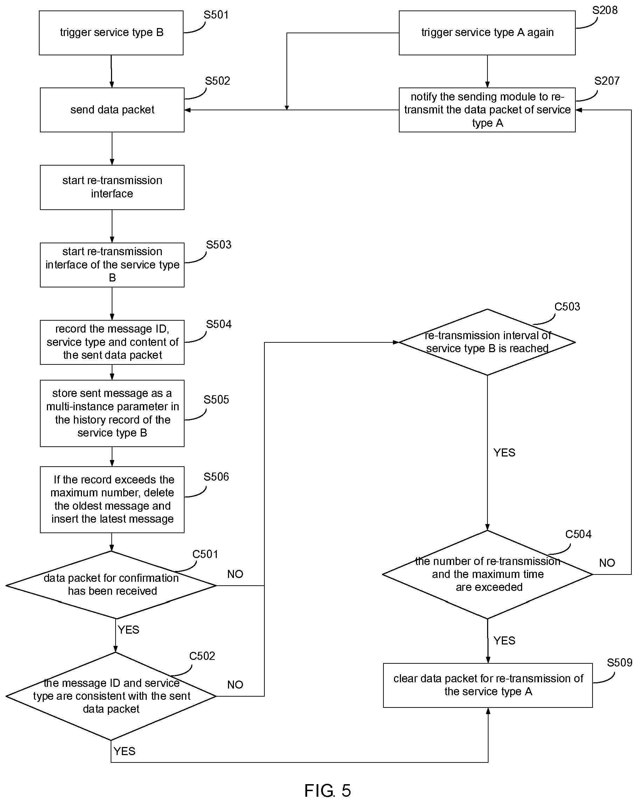

This example provides a mechanism between an IOV device and a vehicle management platform, where a message ID is used as a basis for confirmation and re-transmission is made according to different service types This example describes a method of re-transmission for a current single data service type. As shown in Fig. 5, the optional process is as follows:
Step S501: the IOV device triggers service type B;
Step S502: the IOV device sends a message data packet;
Step S503: the IOV device starts the re-transmission interface of the service type B;
Step S504: it is recorded in the re-transmission interface the message ID, service type and data packet content of the data packet sent for service type B;
Step S505: the recorded data content are stored as a multi-instance parameter in the history record of the corresponding service type;
Step S506: the history record are processed, the oldest data content is deleted and the latest data content is kept according to the maximum number of instances that can be saved;
Judgment C501: it is judged whether the confirmation data packet returned by the vehicle management platform is received before the re-transmission interval time of service type B is reached;
Judgment C502: it is judged whether the message ID and service type in the received confirmation data packet are consistent with that of the sent packet;
Judgment C503: it is judged whether the re-transmission time interval of the service type B is reached;
Judgment C504: it is judged whether the maximum number of re-transmission and the maximum time of re-transmission of the service type B are exceeded;
Step S507: the sending module are notified to re-transmit the data packet of the service type B;
Step S508: the event of the service type B is triggered again;
Step S509: the data packet for re-transmission of the service type B is cleared.

### Example 5

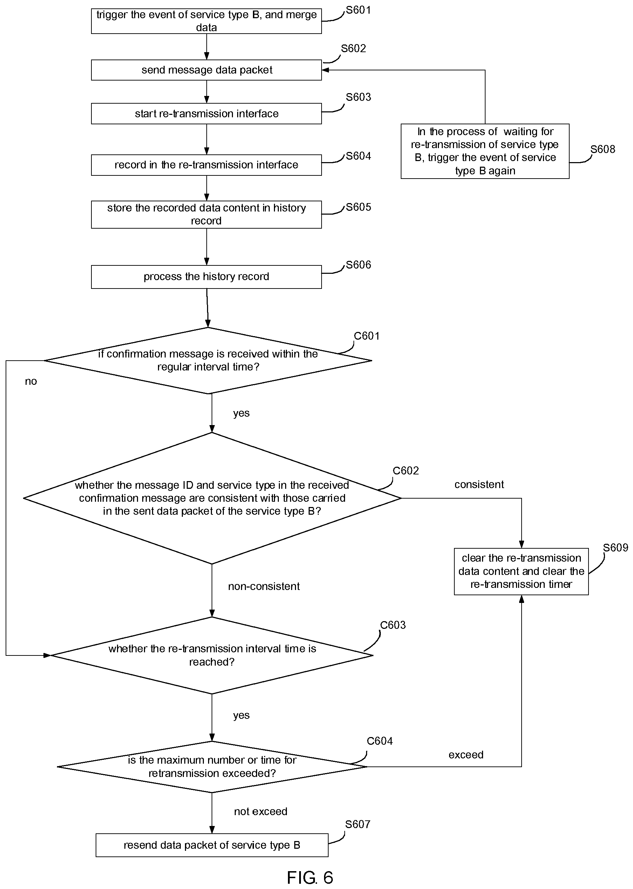

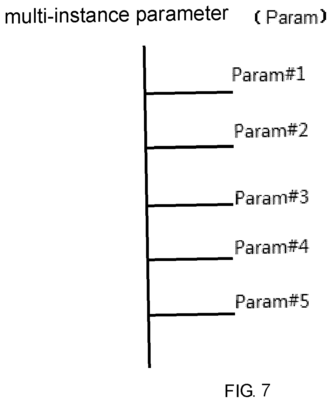

Referring to Fig. 6, in this example, the optional implementation of re-transmission scheme for IOV device and vehicle management platform is described in detail:
Step S601: After receiving the event triggering notification of service type B, the IOV device collects the parameter data corresponding to the service type B, and merges the historical data under the multi instance node that the service type B has not sent. As shown in Fig. 7, under one parameter type, multiple data collections for this parameter type are reserved, and the combined data is filled into the message data package to be sent, which can also carry the message ID and the service type assigned by the IOV device. The process proceeds to step S602;
Step S602: the IOV device calls the uplink interface to start sending the message packet of the service type B to the vehicle management platform, the process proceeds to step S603 according to the service type;
Step S603: the corresponding re-transmission interface are started according to the service type, here the interface of the service type B is started, the interval time is read in the interface, and a re-transmission timer of the service type B is enabled. The processing interface of the service type B for re-transmission is registered, and the process proceeds to step S604;
Step S604: the message ID, service type and data content of the data packet to be re-transmitted are recorded in the re-transmission interface, and the process proceeds to step S605;
Step S605: the recorded data content is stored as a multi instance parameter in the history record of the corresponding service type. As shown in FIG. 7, Param is a multi instance parameter, which may record multiple instances (such as Param#1 to Param#5), and the process proceeds to step S606.
Step S606: the historical record is processed; the oldest data content are deleted and the latest data content are reserved according to the maximum number of instances that can be saved. As shown in FIG. 7, when the maximum number of instances is 5 and 5 parameter instances have been saved, Param#1 is deleted, and new data content is inserted. Phe process proceeds to step C601.
Judgment C601: it is blocked in the downlink instruction receiving module, the confirmation message data packet returned by the vehicle management platform; if the confirmation message packet is received within the regular interval time, the process proceeds to judgment C602; if no confirmation message is received beyond the regular interval time, the process proceeds to step C603;
Judgment C602: it is judged whether the message ID and the service type in the received confirmation message are consistent with those carried in the transmission data packet of the service type B; if they are consistent, it means that the transmission data packet has been successfully received by the vehicle management platform, the process proceeds to step S609; if not, the process proceeds to step C603;
Judgment C603: it is judged whether the re-transmission interval time is reached; if it has already been reached, it means that no confirmation data packet of service type B has been received within the time interval, the process proceeds to step C604;
Judgment C604: if the maximum number of re-transmissions or the maximum time of re-transmissions has been exceeded, it can be indicated that re-transmission is no longer needed, and the process may proceed to step S609; if the maximum number of re-transmissions and the maximum time of re-transmissions has not been exceeded, the process may proceed to step S607.
Step S607: if the current situation meets the re-transmission conditions, the data packet to be re-transmitted for service type B, including message ID, service type, data content is extracted, the sending module is notified to resend data packet of the service type B;
Step S608: in the process of waiting for re-transmission of service type B , if the IOV device triggers service type B event again, the IOV device recollects the parameter data corresponding to service type B and fills the parameter data into the message data packet to be sent, which may also carry the message ID and the service type assigned by the IOV device, and the process proceeds to step S602. That is, the new data content of the service type B covers the original data content to be re-transmitted to ensure that the latest data content is sent to the vehicle management platform;
Step S609: if the data collected for service type B is sent successfully or no longer meets the re-transmission conditions, the re-transmission data content and the re-transmission timer are cleared.

An embodiment of the disclosure also provides a computer-readable storage medium, which stores computer executable instructions that when executed, implement the method for transferring data of on-board device.

In the present disclosure, the message ID is used as the confirmation basis and re-transmission is made according to the service type, avoiding the situation that a large number of uplink and downlink instructions are discarded and sent repeatedly, reducing the use of internal resources, and reducing the data flow of network communication.

It will be understood by those skilled in the art that all or some of the steps, systems, and functional modules/units in the methods disclosed above may be implemented as software, firmware, hardware, and appropriate combinations thereof. In a hardware embodiment, the division between functional modules/units mentioned in the above description does not necessarily correspond to the division of physical components; for example, a physical component may have multiple functions, or a function or step may be performed by several physical components in cooperation. Some or all components may be implemented as software executed by a processor, such as a digital signal processor or microprocessor, or as hardware, or as an integrated circuit, such as a dedicated integrated circuit. Such software may be distributed on a computer-readable medium, which may include a computer storage medium (or a non-temporary medium) and a communication medium (or a temporary medium). As is known to those skilled in the art, the term computer storage medium includes volatile and non-volatile, removable and non-removable media implemented in any method or technology for storing information, such as computer-readable instructions, data structures, program modules or other data. Computer storage medium includes but is not limited to random access memory (RAM), read-only memory (ROM), electrically erasable programmable read-only memory (EEPROM), flash memory or other storage technology, compact disc read-only memory (CD-ROM), digital multi-function disk (DVD) or other optical disk storage, magnetic cartridge, tape, disk storage or other magnetic storage apparatus, or any other medium that can be used to store the desired information and can be accessed by the computer. In addition, it is known to those of ordinary skill in the art that the communication medium generally includes computer-readable instructions, data structures, program modules or other data in modulation data signals such as carriers or other transmission mechanisms, and may include any information delivery medium.

It is understood by those skilled in the art that the technical solution of the disclosure can be modified or replaced equivalently without departing from the spirit and scope of the technical solution of the disclosure, which shall be covered in the scope of claims of the disclosure.

### industrial applicability

In the embodiments of the present disclosure, the message ID is used as the confirmation basis and re-transmission is made according to the service type, avoiding the situation that a large number of uplink and downlink instructions are discarded and sent repeatedly, reducing the use of internal resources, and reducing the data flow of network communication.

## Claims

1. A method for transferring data of on-board device, comprising:
parsing a service type and a message identifier of a target message for re-transmission;
sending the target message for re-transmission to a corresponding re-transmission interface according to the service type and the message ID of the target message for re-transmission; and
sending the target message for re-transmission to a vehicle management platform when a re-transmission time interval is reached.

2. The method according to claim 1, before sending the target message for re-transmission to the vehicle management platform, the method further comprises:
merging the target message for re-transmission with a data message temporarily stored in the re-transmission interface, and using a merged data message as a target message for re-transmission.

3. The method according to claim 1, before parsing the service type and the message identifier of the target message for re-transmission, the method further comprises:
determining the target message for re-transmission.

4. The method according to claim 2, wherein, determining the target message for re-transmission comprises:
using a data message sent to the vehicle management platform as the target message for re-transmission; or
using a data message which is sent to the vehicle management platform and for which a feedback confirmation from the vehicle management platform is not received as the target message for re-transmission.

5. The method according to claim 1, after sending the target message for re-transmission to the vehicle management platform, the method further comprises:
clearing the target message for re-transmission.

6. The method according to claim 1, before sending the target message for re-transmission to the vehicle management platform, the method further comprises:
detecting whether a number of current re-transmission of the target message for re-transmission exceeds a maximum number of re-transmission or a time of current re-transmission of the target message for re-transmission exceeds a maximum time of re-transmission; executing the step of sending the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clearing the target message for re-transmission when the number of current re-transmission of the target message for re-transmission exceeds the maximum number of re-transmission or the time of current re-transmission of the target message for re-transmission exceeds the maximum time of re-transmission .

7. The method according to claim 1, before sending the target message for re-transmission to the vehicle management platform, the method further comprises:
detecting whether a feedback confirmation from the vehicle management platform is received; executing the step of sending the target message for re-transmission to the vehicle management platform when the feedback confirmation from the vehicle management platform is not received; and clearing the target message for re-transmission when the feedback confirmation from the vehicle management is received.

8. The method according to claim 7, wherein, detecting whether the feedback confirmation from the vehicle management platform is received comprises:
parsing a service type and a message ID of a confirmation data packet sent by the vehicle management platform;
matching the service type and the message ID of the confirmation data packet acquired by parsing with the service type and the message ID of the target message for re-transmission;
determining the feedback confirmation from the vehicle management platform has been received when the matching is successful;
determining the feedback confirmation from the vehicle management platform has not been received when the matching fails.

9. An apparatus for transferring data of on-board device, comprising:
a parsing module, configured to parse a service type and a message identifier (ID) of a target message for re-transmission;
an interface module, configured to send the target message for re-transmission to a corresponding re-transmission interface according to the service type and the message ID of the target message for re-transmission; and
a sending module, configured to send the target message for re-transmission to a vehicle management platform when a re-transmission time interval is reached.

10. The apparatus according to claim 9, further comprising:
a merging module, configured to merge the target message for re-transmission with a data message temporarily stored in the re-transmission interface, and use a merged data message as a target message for re-transmission.

11. The apparatus according to claim 9, further comprising:
a determination module, configured to determine the target message for re-transmission.

12. The apparatus according to claim 10, wherein, the determination module is configured to:
use a data message sent to the vehicle management platform as the target message for re-transmission; or
use a data message which is sent to the vehicle management platform and for which a feedback confirmation from the vehicle management platform is not received as the target message for re-transmission.

13. The apparatus according to claim 9, further comprising:
a clear module, configured to clear the target message for re-transmission.

14. The apparatus according to claim 9, further comprising:
a detection module, configured to detect whether a number of current re-transmission of the target message for re-transmission exceeds a maximum number of re-transmission or a time of current re-transmission of the target message for re-transmission exceeds a maximum time of re-transmission before the sending module sends the target message for re-transmission to the vehicle management platform; trigger the sending module to send the target message for re-transmission to the vehicle management platform when the number of current re-transmission of the target message for re-transmission do not exceed the maximum number of re-transmission and the time of current re-transmission of the target message for re-transmission do not exceed the maximum time of re-transmission; and clear the target message for re-transmission when the number of current re-transmission of the target message for re-transmission exceeds the maximum number of re-transmission or the time of current re-transmission of the target message for re-transmission exceeds the maximum time of re-transmission.

15. The apparatus according to claim 14, the detection module is further configured to:
detect whether a feedback confirmation from the vehicle management platform is received before the sending module sends the target message for re-transmission to the vehicle management platform; trigger the sending module to send the target message for re-transmission to the vehicle management platform when the feedback confirmation from the vehicle management platform is not received; and clear the target message for re-transmission when the feedback confirmation from the vehicle management is received.

16. The method according to claim 7, wherein, the detection module is further configured to:
parse a service type and a message ID of a confirmation data packet sent by the vehicle management platform;
match the service type and the message ID of the confirmation data packet acquired by parsing with the service type and the message ID of the target message for re-transmission;
determine the feedback confirmation from the vehicle management platform has been received when the matching is successful; and
determine the feedback confirmation from the vehicle management platform has not been received when the matching fails.
